# FASCICULE DE BREVET EUROPEEN

(11) **EP 0 691 238 B1**
(45) Date de publication et mention de la délivrance du brevet: **15.10.1997**
(21) Numéro de dépôt: 95401346.2
(22) Date de dépôt: 09.06.1995
(51) Int. Cl.: B60N 2/22

(54) **Articulation à mémoire de position de réglage pour siège**
Gelenkbeschlag mit Verstellungspositionsspeicher für Sitze
Articulation with adjusting position memory for seats

(30) Priorité: 05.07.1994 FR 9408297
(43) Date de publication de la demande: 10.01.1996
(73) Titulaire: CESA COMPAGNIE EUROPEENNE DE SIEGES POUR AUTOMOBILES, 92307 Levallois-Perret Cédex (FR)
(72) Inventeur: Fourrey, Francois, F-45290 Nogent sur Vernisson (FR); Rager, Sylvain, F-45290 Nogent sur Vernisson (FR)
(74) Mandataire: Polus, Camille

(56) Documents cités:
- DE-A- 3 319 593
- DE-A- 3 521 730
- FR-A- 1 347 823
- FR-A- 2 463 596
- FR-A- 2 494 574
- GB-A- 2 117 440
- GB-A- 2 241 884
- US-A- 3 953 069
- PATENT ABSTRACTS OF JAPAN vol. 15 no. 302 (C-0855) ,2 Août 1991 & JP-A-03 112507 (AISIN SEIKI)

## Description

La présente invention concerne les sièges et a plus particulièrement pour objet une articulation à mémoire de position de réglage d'inclinaison qui est destinée à équiper un siège constitué notamment d'une assise et d'un dossier mobiles en rotation relativement l'un à l'autre selon au moins un axe.

Dans de nombreux secteurs industriels et pour de nombreux usages, on se sert de sièges constitués notamment d'une assise et d'un dossier mobiles en rotation relativement l'un à l'autre selon au moins un axe de manière à pouvoir à volonté soit incliner progressivement le dossier par rapport à l'assise pour lui donner une position de réglage choisie soit rabattre le dossier par exemple vers ou contre l'assise et inversement dans une position basculée ou dans une position dressée, respectivement.

De tels sièges sont utilisés notamment à bord des véhicules automobiles de tourisme, en particulier du type "coupé" ou "cabriolet", voire "berline" qui sont équipés de seulement deux portes latérales, une de chaque côté. De tels véhicules exigent des sièges avant qui soient à la fois soit inclinables à volonté au gré de leurs occupants pour leur confort, soit escamotables notamment par rabattement du dossier vers l'assise pour faciliter l'accès à ce qui se trouve à l'arrière du siège.

Des solutions d'articulation pour sièges de véhicules automobiles qui autorisent un réglage progressif, continu ou discontinu, de l'inclinaison du dossier par rapport à l'assise sont par exemple exposées dans les documents FR-A-2 463 596 et FR-A-2 541 950 et 2 547 778.

Des solutions d'articulation qui permettent un rabattement du dossier vers l'assise sont par exemple exposées dans les documents FR 2 642 377 et FR 93 15 598. Toutes ces solutions présentent l'inconvénient d'être encombrantes, de nécessiter des constituants supplémentaires par rapport à une articulation plus classique utilisée à bord des véhicules berline à quatre portes latérales, deux par côté.

Un inconvénient majeur des articulations complexes qui permettent à la fois un réglage de l'inclinaison du dossier et un rabattement du dossier, réside dans le fait que lors du relèvement du dossier préalablement rabattu pour le faire passer de sa position basculée à sa position dressée, le dossier ne retrouve pas systématiquement la position choisie de réglage de l'inclinaison qu'il occupait précédemment avant rabattement que ce soit par la conception même de l'articulation ou que ce soit par suite d'une fausse manoeuvre de l'utilisateur. Il faut alors procéder à un nouveau réglage ou à une retouche du réglage du dossier pour lui redonner sa position initiale. Une telle opération est fastidieuse et s'impose pourtant lorsque le siège en cause est celui du conducteur.

L'invention a pour but de remédier à la plupart des inconvénients brièvement énumérés précédemment à l'aide d'une articulation pour siège d'une grande simplicité, monobloc, d'encombrement réduit et qui comprend sous un boîtier commun de préférence en forme de barillet pratiquement cylindrique, les moyens nécessaires au réglage de l'inclinaison progressive du dossier et les moyens nécessaires au rabattement du dossier, et avec en outre une mémoire de la position de réglage en inclinaison du dossier afin que celle-ci soit immédiatement retrouvée et reprise lorsqu'on redresse le dossier préalablement rabattu.

Cette articulation, de préférence modulaire, peut être construite avec les moyens de rabattement ou sans ceux-ci, ce qui permet de l'utiliser indifféremment pour des sièges de véhicules à une ou deux portes latérales, par côté.

La présente invention a pour objet une articulation à mémoire de position de réglage d'inclinaison, du type décrit dans FR-A-2 494 574, qui est destinée à équiper un siège constitué notamment d'une assise et d'un dossier mobiles en rotation relativement l'un à l'autre selon au moins un axe de manière à pouvoir à volonté soit incliner progressivement le dossier par rapport à l'assise, soit rabattre le dossier vers l'assise et inversement dans une position basculée ou dans une position dressée respectivement, et qui comprend notamment un flasque fixe avec un alvéole destiné à être fixé à l'un de ces assise et dossier, un flasque mobile avec un alvéole destiné à être fixé à l'autre de ces assise et dossier et où ces alvéoles délimitent ensemble un logement intérieur, un flasque intermédiaire qui est placé dans ce logement de manière à être apte à y tourner selon cet axe, un mécanisme de réglage de l'inclinaison qui est associé à ce flasque intermédiaire et coopère avec ce flasque fixe et qui est mobile entre une position enclenchée dans laquelle ces flasques fixe et intermédiaire sont accouplés en rotation et une position déclenchée dans laquelle ces flasques fixe et intermédiaire sont relativement désaccouplés en rotation pour autoriser un réglage de l'inclinaison, un verrou de blocage de rabattement qui est associé à ce flasque intermédiaire et coopère avec ce flasque mobile et qui est mobile entre une position enclenchée dans laquelle ces flasques mobile et intermédiaire sont accouplés en rotation et une position déclenchée dans laquelle ces flasques mobile et intermédiaire sont relativement désaccouplés en rotation pour autoriser un rabattement et inversement, et une commande mobile agissant sur ces mécanisme et verrou de manière à faire passer à volonté l'un ou l'autre de ceux-ci de sa position enclenchée à sa position déclenchée afin que le flasque intermédiaire soit accouplé à la fois aux flasques fixe et mobile ou soit à seulement l'un ou l'autre de ces flasques fixe et mobile. Cette articulation est caractérisée en ce que le flasque intermédiaire est un disque avec deux faces opposées, en ce que le mécanisme comprend au moins un grain denté qui est destiné à coopérer avec une denture portée par une paroi latérale axiale de l'alvéole du flasque fixe et qui est monté sur l'une de ces deux faces opposées à l'aide d'un guide qu'elle porte, en ce que le verrou comprend au moins un pêne qui est destiné à coopérer avec une gâche portée par une paroi latérale axiale de l'alvéole du flasque mobile et qui est monté sur l'une de ces deux faces opposées à l'aide d'un guide qu'elle porte.

D'autres caractéristiques de l'invention apparaîtront à la lecture de la description et des revendications qui suivent ainsi qu'à l'examen des figures du dessin annexé, donné seulement à titre d'exemple, où :

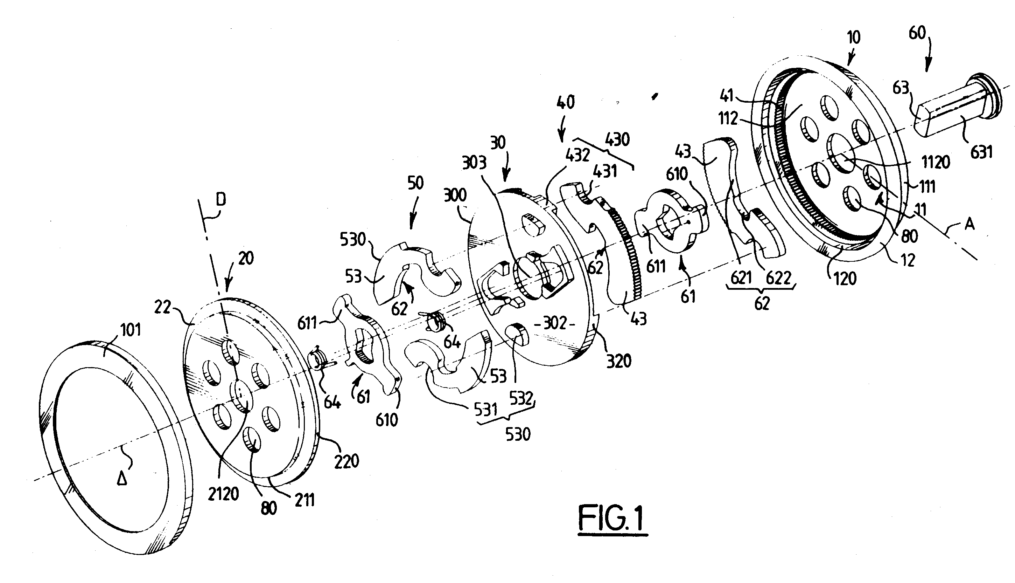

- la Figure 1 est une vue perspective schématique éclatée d'un mode de réalisation d'une articulation selon l'invention;

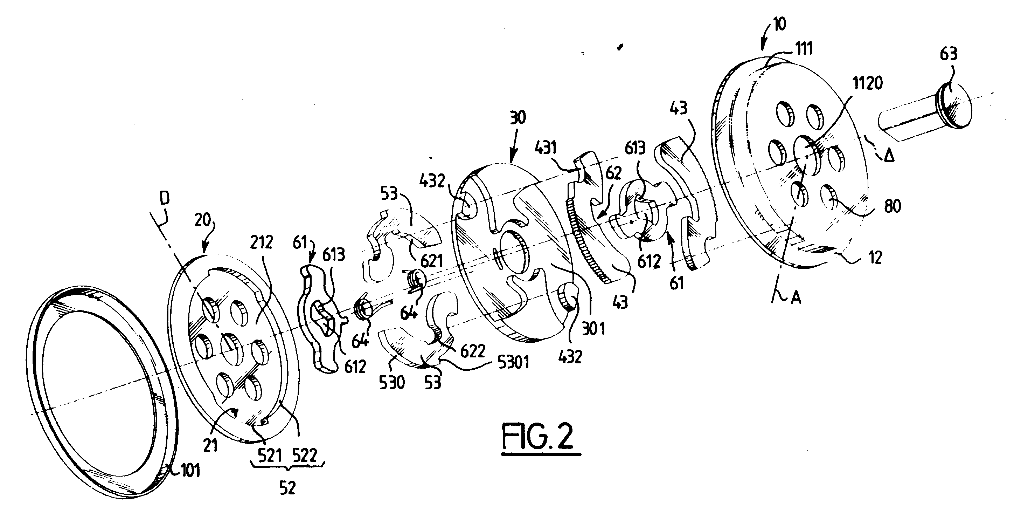

- la Figure 2 est une vue analogue à celle de la Figure 1 de ce mode de réalisation observé sous un angle différent;
- les Figures 3A et 3B sont des vues schématiques partielles simplifiées du mécanisme de réglage de l'inclinaison dans sa position enclenchée et dans sa position déclenchée, respectivement, pour en faire comprendre le fonctionnement; et
- les Figures 4A et 4B sont des vues analogues à celles des Figures 3A et 3B illustrant le verrou de blocage de rabattement dans ses deux positions.

Les articulations pour siège constitué notamment d'une assise et d'un dossier mobiles en rotation relativement l'un à l'autre selon au moins un axe et en particulier pour ceux destinés à équiper des véhicules automobiles terrestres, étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il se reportera utilement aux documents précités pour plus ample information.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'une articulation perfectionnée selon l'invention avant d'en exposer la fabrication au besoin, et le montage et le fonctionnement.

Dans ce qui suit, on décrira une articulation selon l'invention dans son application à un siège qui est destiné à être installé à bord d'un véhicule automobile terrestre et qui est constitué notamment d'une assise et d'un dossier de tout type classique et pour cela ni décrits ni illustrés, mobiles en rotation relativement l'un à l'autre selon au moins un axe Δ de manière à pouvoir à volonté soit incliner progressivement le dossier par rapport à l'assise dans une position oblique améliorant le confort de l'occupant, soit rabattre le dossier vers l'assise et inversement, dans une position basculée facilitant l'accès à ce qui se trouve à l'arrière du siège ou dans une position dressée permettant à un occupant de s'y asseoir, respectivement. Dans ce cas particulier, l'axe d'inclinaison et l'axe de rabattement sont confondus et l'assise A et le dossier D sont signalés symboliquement par des lignes tracées sur les figures du dessin.

Une articulation à mémoire de position de réglage de l'inclinaison selon l'invention comprend, essentiellement, un flasque 10 fixe, un flasque 20 mobile, un flasque 30 intermédiaire, un mécanisme de réglage 40 de l'inclinaison, un verrou de blocage 50 de rabattement, un dispositif de commande 60 et, de préférence, une sécurité 70. Cette articulation est aussi apte à recevoir des moyens de fixation 80 pour monter chacun des deux flasques fixe et mobile l'un sur l'assise et l'autre sur le dossier d'un siège.

Comme on le voit, le flasque fixe 10 présente un alvéole 11 en forme de cuvette afin de définir un logement pour les raisons qui apparaîtront par la suite. L'alvéole 11 est délimité par une paroi 111 latérale axiale et un fond 112 transpercé d'un passage 1120 destiné à servir de palier ou à recevoir un palier de tout type approprié classique, pour les raisons qui apparaîtront par la suite. De préférence, ce flasque fixe est muni d'une collerette 12 ou similaire pour les raisons qui apparaîtront par la suite. Le flasque fixe présente aussi, de préférence, au moins une surface 120 cylindrique circulaire intérieure, coaxiale à l'axe Δ, de manière à constituer un agencement de guidage et de centrage pour les raisons qui apparaîtront par la suite. La surface 120 est ménagée de préférence directement sur un rebord du flasque fixe ou bien le cas échéant sur un anneau 101 auxiliaire de montage et d'assemblage, qui est destiné à être fixé de préférence au flasque fixe par exemple par sertissage à l'aide d'un collet rabattable ou toute autre technique.

Le flasque mobile 20 se présente à la manière d'un alvéole 21 en forme de cuvette afin de définir un logement pour les raisons qui apparaîtront par la suite. L'alvéole est délimité par une paroi 211 latérale axiale et par un fond 212 transpercé d'un passage 2120 destiné à servir de palier ou à recevoir un palier comme indiqué à propos du flasque fixe. De préférence, ce flasque mobile est muni d'une collerette 22 avec une tranche 220 cylindrique circulaire, coaxiale à l'axe Δ, de manière à constituer un agencement de guidage et de centrage comme indiqué à propos du flasque fixe.

Le flasque intermédiaire 30 est destiné à être placé dans le logement délimité par les alvéoles 11 et 21 des flasques fixes 10 et mobile 20, respectivement. Le flasque intermédiaire 30 se présente à la manière d'un disque 300 avec des faces 301 et 302 opposées ainsi qu'avec une tranche 320 cylindrique circulaire, coaxiale à l'axe Δ de manière à constituer un agencement de guidage et de centrage comme indiqué à propos des flasques fixe et mobile. La face 301 est placée en regard du flasque fixe 10 et la face 302 est placée en regard du flasque mobile 20. Ce disque est transpercé d'un orifice 303 central.

Le mécanisme de réglage 40 de l'inclinaison est associé au flasque intermédiaire 30 et coopère avec le flasque fixe 10. Ce mécanisme est mobile entre une position enclenchée dans laquelle les flasques fixe 10 et intermédiaire 30 sont accouplés en rotation, et une position déclenchée dans laquelle les flasques fixe 10 et intermédiaire 30 sont désaccouplés en rotation pour autoriser un réglage de l'inclinaison. Ce mécanisme 40 comprend une denture 41 portée par la paroi latérale axiale 111 de l'alvéole 11 du flasque fixe 10 et au moins un "grain" ou loqueteau 43 denté mobile destiné à coopérer avec la denture 41. Le grain denté 43 est monté mobile sur l'une des faces 301, 302 du flasque intermédiaire 30 à l'aide d'un guide 430. Ce guide 430 comprend notamment une portée 431 de préférence en arc de cylindre circulaire concave sur le grain denté 43 et un pivot 432 de préférence en arc de cylindre circulaire convexe sur la face en question du flasque intermédiaire.

Le verrou de blocage 50 de rabattement est associé au flasque intermédiaire 30 et coopère avec le flasque mobile 20. Ce verrou est mobile entre une position enclenchée dans laquelle les flasques mobile 20 et intermédiaire 30 sont accouplés en rotation et une position déclenchée dans laquelle les flasques mobile 20 et intermédiaire 30 sont relativement désaccouplés en rotation pour autoriser un rabattement et inversement. Ce verrou 50 comprend au moins une gâche 52 portée par la paroi latérale axiale 211 de l'alvéole 21 du flasque mobile 20, et au moins un pêne 53 destiné à coopérer avec la gâche 52 et monté mobile sur l'une des faces 301, 302 du flasque intermédiaire 30 à l'aide d'un guide 530. La gâche 52 a la configuration d'une encoche en créneau dont l'embrasure est constituée d'une entaille 521 et dont le merlon est constitué d'une butée 522 de préférence en arc de cercle concave. Le pêne 53 a la configuration d'un loquet avec un flanc 530 de préférence en arc de cercle convexe et un épaulement 5301 pratiquement radial destinés à coopérer avec l'entaille 521 ou la butée 522. Ce guide 530 comprend une portée 531 de préférence en arc de cylindre circulaire concave sur le pêne 53 et un pivot 532 de préférence en arc de cylindre circulaire convexe sur la face en question du flasque intermédiaire.

Comme cela apparaîtra par la suite, le mécanisme 40 et le verrou 50 opèrent dans des plans propres particuliers qui sont parallèles et perpendiculaires à l'axe de rotation Δ. De la sorte, le mécanisme et le verrou peuvent être situés d'un même côté d'une face du flasque intermédiaire ou chacun d'eux est situé d'un côté d'une face opposée du flasque intermédiaire.

La commande mobile 60 comprend au moins deux couples de came 61 et contre-came 62 dont la première 61 a un profil 610 avec une semelle 6101 et un bout 6102 et dont la seconde 62 a un appui 621 et un dégagement 622 avec un bec 623, ainsi qu'un arbre 63 apte à entraîner les cames 61. Pour les raisons qui apparaîtront par la suite semelle et appui, d'une part, et bout et bec, d'autre part, sont destinés à coopérer les uns avec les autres pour la position verrouillée ou la position déverrouillée. L'un de ces couples est destiné à agir sur le mécanisme 40 et l'autre de ces couples est destiné à agir sur le verrou 50. La came 61 d'un couple est portée de préférence par un bras 611 radial monté sur l'arbre 63 alors que la contre-came 62 de ce couple est portée par le grain denté 43 ou par le pêne 53. S'il y a lieu, des plots ou similaires portés par le flasque intermédiaire contribuent au guidage des cames. Comme on le comprendra par la suite, il y autant de couples de came et contre-came qu'il y a, d'une part, de pênes pour le verrou et, d'autre part, de grains dentés pour le mécanisme. L'arbre 63 est coaxial à l'axe Δ et est monté sur les parties des flasques fixe et mobile qui servent de palier ou aptes à en recevoir. Cet arbre est apparent à l'extérieur de l'un des flasques fixe et mobile au moins pour les raisons qui apparaîtront par la suite. Une sollicitation élastique 64 agit sur chacune des cames 61 de manière que chaque semelle 6101 soit normalement au contact de l'appui 621 correspondant de la contre-came 62 du couple considéré, afin de tendre à placer et maintenir le mécanisme 40 et le verrou 50 en position verrouillée par mise en prise des grains dentés et denture, d'une part, et des pênes et gâches, d'autre part. La sollicitation élastique 64 comprend par exemple un ressort du type de ceux utilisés pour les "pinces à linge", dont une branche est ancrée de toute manière appropriée par exemple sur la came et dont l'autre est ancrée de même sur le flasque intermédiaire.

La ou les sollicitations élastiques peuvent être assurées à l'aide d'un ressort unique ou de deux ressorts distincts. Si l'on utilise un ressort unique ou deux ressorts séparés situés d'un même côté du flasque intermédiaire alors que les cames sont situées sur des côtés opposés de ce flasque, il faut prévoir une branche sur le ressort et une lumière dans le flasque intermédiaire que traverse cette branche pour agir. Les formes données à une semelle et appui d'un couple sont telles que sous l'action de la sollicitation élastique un effort pratiquement radial centrifuge est développé.

L'arbre 63 présente deux méplats 631 symétriques et la came 61 présente un évidement 612 central en secteur avec deux appuis 613 symétriques destinés à coopérer chacun avec un des méplats 631 pour les raisons qui apparaîtront par la suite. Les appuis 613 ont une configuration en "papillon" ou similaire et ménagent de préférence un certain jeu avec les méplats pour les raisons qui apparaîtront par la suite.

La sécurité 70 est constituée par la butée 522 de la gâche 52 qui est portée par le flasque mobile 20 et par un flanc 530 du pêne 53 qui est porté par le flasque intermédiaire 30. La sécurité est destinée à condamner le verrou en position déclenchée comme on le comprendra par la suite.

L'articulation perfectionnée selon l'invention se présente en une entité qui a l'aspect d'un boîtier ou d'un barillet relativement plat et cylindrique. Les deux flasques sont réunis par exemple à l'aide de l'anneau serti, soudé ou autrement fixé de toute manière classique courante par exemple au flasque fixe de manière que l'autre de ces deux flasques et le flasque intermédiaire puissent y tourner coaxialement selon l'axe Δ défini par l'agencement de guidage et de centrage qui comprend la surface 120 et les tranches 220 et 320.

Tout ce qui précède est clairement illustré sur les figures du dessin annexé auxquelles il y a lieu de se reporter.

Tous les constituants d'une articulation selon l'invention sont faits par exemple en métal approprié et/ou en résine synthétique appropriée, qui sont ouvrés selon des techniques traditionnelles convenablement adaptées tels que la découpe, l'estampage, le poinçonnage, le perçage, le moulage ....

Tous les constituants d'une articulation selon l'invention sont réunis, montés et assemblés comme cela ressort clairement notamment de l'examen des figures du dessin.

On en expliquera maintenant le fonctionnement.

On rappellera que, comme il est classique, le dispositif de commande est équipé d'un levier avec une poignée de manoeuvre, calé sur l'arbre apparent à l'extérieur de l'un au moins des flasques fixe et mobile, de manière à pouvoir faire tourner cet arbre de préférence dans l'un ou l'autre des deux sens opposés. Un tel levier avec la poignée est habituellement placé à portée de main de l'occupant du siège, le plus souvent sur un côté de l'assise ou sous celle-ci à proximité de son bord antérieur.

On supposera qu'à l'état initial le mécanisme de réglage de l'inclinaison et le verrou de blocage de rabattement sont en position enclenchée où la semelle de la came repose contre l'appui de la contre-came. On voit alors de ce fait que et le flasque fixe et le flasque mobile sont accouplés au flasque intermédiaire. Dans cette condition l'articulation est "rigide", aucune rotation selon l'axe Δ n'est possible.

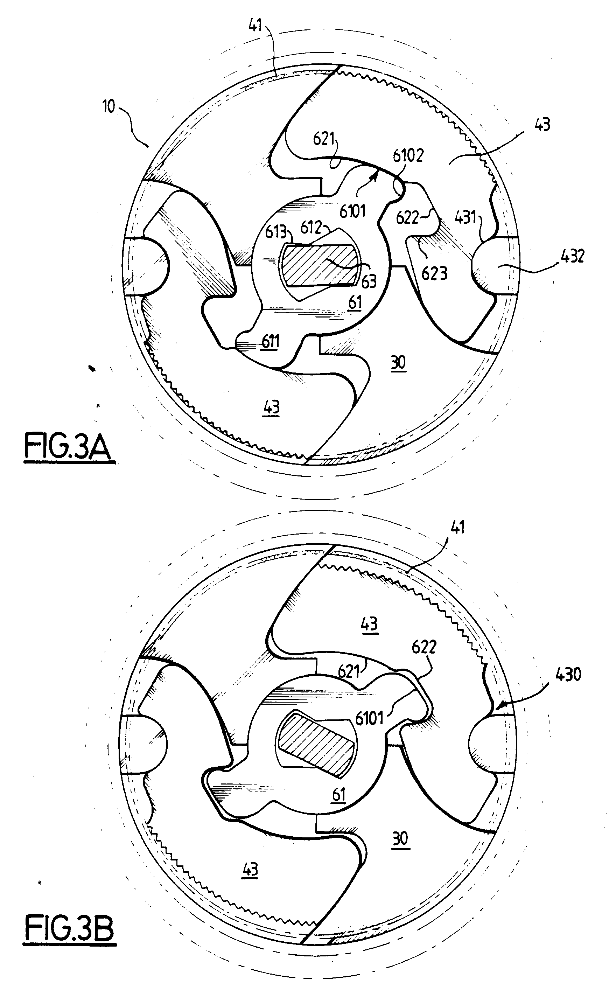

Si maintenant on agit sur le levier lié à l'arbre dans le sens approprié (sens horaire sur la Figure 3) à l'encontre de la sollicitation élastique, l'un au moins des méplats de l'arbre rencontre au moins un appui de l'évidement de la came après résorption du jeu et la fait tourner et ainsi sépare d'abord sa semelle de l'appui pour la placer à l'aplomb du dégagement, puis le bout rencontre le bec : le ou les grains dentés initialement en prise avec la denture s'en sépare(nt) rapidement. On a fait passer le mécanisme de sa position enclenchée à sa position déclenchée. Le flasque intermédiaire est désaccouplé du flasque fixe mais demeure accouplé au flasque mobile. On observera à ce propos que si les sollicitations élastiques sont assurées par un ressort unique, du fait du montage adopté pour ce ressort, l'effort qu'il exerce sur le ou les pênes croît ce qui renforce sa mise en prise dans la gâche et améliore l'enclenchement du verrou. On peut donc modifier l'inclinaison du dossier relativement à l'assise et lui donner la valeur recherchée. Le relâchement de la poignée du levier fait que les grains reviennent en prise avec la denture sous l'action de la came rappelée par la sollicitation élastique, de manière que le mécanisme reprenne sa position enclenchée. L'articulation a repris une situation "rigide".

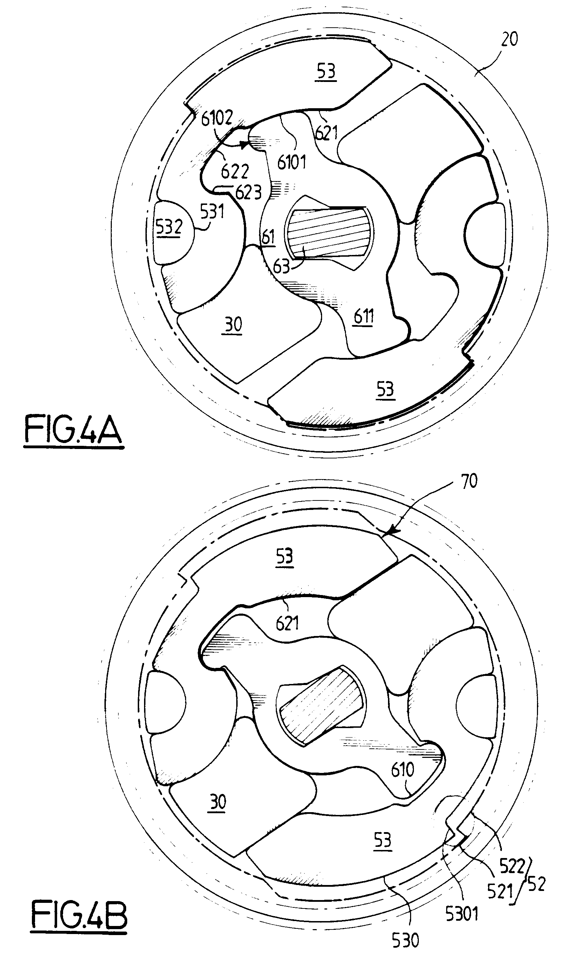

Si l'on agit maintenant sur le levier lié à l'arbre dans le sens opposé (sens anti-horaire sur la Figure 4), c'est au moins un autre des méplats de l'arbre qui rencontre au moins un appui correspondant de l'évidement de l'autre came après résorption du jeu et la fait tourner et ainsi sépare d'abord sa semelle de l'appui pour la placer à l'aplomb du dégagement puis le bout rencontre le bec : le ou les pêne(s) du verrou initialement en prise avec la gâche s'en sépare(nt) rapidement. On a fait passer le verrou de sa position enclenchée à sa position déclenchée. Le flasque intermédiaire est désaccouplé du flasque mobile mais demeure accouplé au flasque fixe. Ce qui a été exposé auparavant à propos de l'effort développé par la sollicitation élastique vaut aussi maintenant pour le mécanisme. On peut donc rabattre le dossier vers l'assise. On observa qu'au cours de cette opération, la sécurité joue son rôle puisque le flanc du pêne reste en regard de la butée de la gâche et glisse contre elle et lui interdit de revenir en prise avec celle-ci : on maintient de la sorte le verrou condamné en position déclenchée. Du fait de la présence et de l'action de la sécurité, il n'est pas nécessaire d'agir en permanence sur la poignée du levier de la commande. Pour redresser le dossier, il suffit de le faire basculer dans le sens opposé : il retrouve alors à coup sûr son inclinaison initiale puisque celle-ci est fixée par la position du pêne porté par le flasque intermédiaire qui est resté accouplé au flasque fixe. S'il y a lieu, le rappel en position dressée du dossier est obtenu ou aidé par un ressort spécial compensateur associé au siège, comme il est connu.

On observera aussi qu'au cours d'un rabattement ou d'un redressement du dossier et lorsque le levier lié à l'arbre est laissé libre, le ou les méplats de l'arbre opposés à celui ou ceux ayant servi à la manoeuvre de déclenchement du verrou, sous l'action de la sollicitation élastique sont ou viennent au contact du ou des appuis correspondant de l'évidement de la came du verrou dont la semelle est emprisonnée dans le dégagement de la contre-came du pêne dont le flanc est lui même maintenu appliqué contre la butée de la gâche. Du fait d'une telle chaîne cinématique, la sécurité rend impossible tout déverrouillage du mécanisme de réglage de l'inclinaison par manoeuvre volontaire ou fortuite du levier lié à l'arbre, ce dernier ne pouvant tourner dans le sens opposé d'un angle suffisant pour autoriser le désengagement des grains dentés de la denture du flasque fixe. La mémoire de la position de réglage de l'inclinaison du dossier est ainsi toujours sauvegardée.

On notera, par contre, qu'avec une telle chaîne cinématique, lorsque l'arbre occupe sa position de repos, normale, où il est maintenu de toute manière appropriée, on peut agir sur le mécanisme de réglage de l'inclinaison sans entrave du verrou de blocage de rabattement ou, inversement, on peut agir sur le verrou de blocage de rabattement sans entrave du mécanisme de réglage de l'inclinaison.

Dans ce qui précède, on a supposé une commande unique qui opère dans deux sens opposés. Il est clair qu'on peut utiliser aussi une commande multiple, par exemple dédoublée, l'une pour le réglage de l'inclinaison et l'autre pour le rabattement. Dans un tel cas, comme il est connu, la poignée de manoeuvre est dédoublée et celle destinée au rabattement est située par exemple sur le côté latéral extérieur du dossier. Il suffit alors d'utiliser une timonerie convenable, rigide articulée ou souple de tout type approprié, qui relie cette poignée de manoeuvre à l'arbre de la commande mobile ou à la came appropriée.

On a supposé qu'une seule articulation selon l'invention était utilisée par siège. Il est clair qu'on peut utiliser deux articulations par siège, une située de chaque côté : il faut alors dans ce cas que la commande agisse simultanément sur les deux articulations. Pour ce faire, il suffit par exemple de prolonger l'arbre pour qu'il s'étende transversalement d'un côté à l'autre du siège. De même, si la commande au lieu d'être unique avec deux sens opposés de fonctionnement est double, on peut faire en sorte qu'elle soit coaxiale à l'axe Δ.

Du fait de sa conception modulaire, une articulation selon l'invention convient aussi au cas où on n'a pas besoin de basculer le siège puisqu'il suffit pour cela de ne pas y monter le verrou et de rendre solidaire en rotation par toute technique appropriée le flasque intermédiaire et l'un des deux autres flasques.

Dans ce qui précède, on a supposé que le mécanisme avait deux grains dentés diamétralement opposés et que le verrou avait de même deux pênes et deux gâches diamétralement opposés. Il est clair que les nombres de grains et de pênes-gâches peuvent être différents l'un de l'autre et que la situation des grains et pênes-gâches peut être modifiée.

Dans ce qui précède, on a supposé que les grains du mécanisme et les pênes du verrou étaient animés de mouvements de basculement. Il est clair qu'en utilisant des guides convenablement adaptés, le(s) grain(s) denté(s) et le(s) pêne(s) peuvent avoir des déplacements rectilignes.

On observera que le dispositif de commande à came et contre-came assure une liaison desmodromique ou "positive" pour la mise en position verrouillée et pour la mise en position déverrouillée puisque c'est soit la semelle soit le bout de la came qui agit, soit sur l'appui soit sur le bec de la contre came, respectivement.

Dans la description qui précède, on a supposé que c'est le flasque fixe qui porte la denture intérieure et qui assure le guidage en rotation du flasque intermédiaire et du flasque mobile. Il est clair que ces rôles peuvent être inversés entre flasque fixe et flasque mobile. Il en est de même du flasque fixe et du flasque mobile qui peuvent être intervertis, l'un et l'autre pouvant être montés indifféremment sur le dossier ou sur l'assise. Dans le mode de réalisation illustré, on a supposé que c'est le flasque fixe qui est monté sur l'assise et que c'est le flasque mobile qui est monté sur le dossier.

Dans la description qui précède, on a supposé que c'est le flasque fixe qui est munie d'une surface de guidage et de centrage, étagée ou non, qui coopère avec les tranches du flasque mobile et du flasque intermédiaire pour former l'agencement de guidage et de centrage. Il est clair que toute autre solution peut être adoptée; il suffit que l'un des flasques serve des références aux deux autres pour définir l'axe de rotation.

Dans la description qui précède, on a supposé que les grains du mécanisme de réglage de l'inclinaison étaient montés sur le flasque intermédiaire et la denture de celui-ci était portée par le flasque fixe, il est clair que la disposition inverse peut être retenue et adoptée. Il en est de même des pênes et gâches du verrou qui au lieu d'être respectivement montés sur le flasque intermédiaire et être portées par le flasque mobile peuvent être disposées à l'inverse. On notera qu'on peut aussi utiliser pour partie la solution illustrée et pour partie la solution inverse de celle-ci.

Les moyens de fixation comprennent par exemple des goujons taraudés sertis dans des trous ménagés dans les fonds du flasque fixe et du flasque mobile, autour du passage central. Il est clair que toute autre technique peut être utilisée et que outre de tels goujons ou similaires on peut disposer de clabots ou analogues pour assurer une immobilisation en rotation des flasques fixe et mobile sur les dossier et assise. Tout ceci est classique et la solution adoptée est choisie en fonction des prescriptions requises pour assurer notamment l'interchangeabilité.

Ce qui précède met bien en lumière les particularités distinctives de l'invention, l'intérêt qu'elle offre et les avantages qu'elle procure.

## Revendications

1. Articulation à mémoire de position de réglage d'inclinaison qui est destinée à équiper un siège constitué notamment d'une assise et d'un dossier mobiles en rotation relativement l'un à l'autre selon au moins un axe de manière à pouvoir à volonté soit incliner progressivement le dossier par rapport à l'assise, soit rabattre le dossier vers l'assise et inversement dans une position basculée ou dans une position dressée respectivement, et qui comprend notamment un flasque (10) fixe avec un alvéole (11) destiné à être fixé à l'un de ces assise et dossier, un flasque (20) mobile avec un alvéole (21) destiné à être fixé à l'autre de ces assise et dossier et où ces alvéoles (11, 21) délimitent ensemble un logement intérieur, un flasque (30) intermédiaire qui est placé dans ce logement de manière à être apte à y tourner selon cet axe (Δ), un mécanisme de réglage (40) de l'inclinaison qui est associé à ce flasque intermédiaire (30) et coopère avec ce flasque fixe (10) et qui est mobile entre une position enclenchée dans laquelle ces flasques fixe (10) et intermédiaire (30) sont accouplés en rotation et une position déclenchée dans laquelle ces flasques fixe (10) et intermédiaire (30) sont relativement désaccouplés en rotation pour autoriser un réglage de l'inclinaison, un verrou de blocage (50) de rabattement qui est associé à ce flasque intermédiaire (30) et coopère avec ce flasque mobile (20) et qui est mobile entre une position enclenchée dans laquelle ces flasques mobile (20) et intermédiaire (30) sont accouplés en rotation et une position déclenchée dans laquelle ces flasques mobile (20) et intermédiaire (30) sont relativement désaccouplés en rotation pour autoriser un rabattement et inversement, et une commande (60) mobile agissant sur ces mécanisme (40) et verrou (50) de manière à faire passer à volonté l'un ou l'autre de ceux-ci (40, 50) de sa position enclenchée à sa position déclenchée afin que le flasque intermédiaire (30) soit accouplé à la fois aux flasques fixe et mobile ou soit à seulement l'un ou l'autre de ces flasques fixe (10) et mobile (20), cette articulation étant caractérisée en ce que le flasque intermédiaire (30) est un disque (300) avec deux faces (301, 302) opposées, en ce que le mécanisme (40) comprend au moins un grain denté (43) qui est destiné à coopérer avec une denture (41) portée par une paroi (111) latérale axiale de l'alvéole (11) du flasque fixe (10) et qui est monté sur l'une de ces deux faces opposées (301, 302) à l'aide d'un guide (430) qu'elle porte, en ce que le verrou (50) comprend au moins un pêne (53) qui est destiné à coopérer avec une gâche (52) portée par une paroi (211) latérale axiale de l'alvéole (21) du flasque mobile (20) et qui est monté sur l'une de ces deux faces opposées (301, 302) à l'aide d'un guide (530) qu'elle porte.

2. Articulation selon la revendication 1, caractérisée en ce que le grain denté (43) et le pêne (53) sont montés basculant sur leur guide (430, 530) respectif.

3. Articulation selon la revendication 1 ou 2, caractérisée en ce que le guide (430) comprend une portée (431) sur le grain denté (43) et un pivot (432) sur le flasque intermédiaire (30).

4. Articulation selon la revendication 1, 2 ou 3, caractérisée en ce que le guide (530) comprend une portée (531) sur le pêne (53) et un pivot (532) sur le flasque intermédiaire (30).

5. Articulation selon l'une quelconque des revendications 1 à 4, caractérisée en ce que la commande mobile (60) comprend au moins deux couples de came (61) et contre-came (62) où la première (61) a un profil (610) avec une semelle (6101) et un bout (6102) et où la seconde (62) a un appui (621), un dégagement (622) et un bec (623), un arbre (63) apte à entraîner les cames (61) et une sollicitation élastique (64) agissant sur chacune des cames (61), un de ces couples (61, 62) opérant sur le mécanisme (40) et l'autre de ces couples (61, 62) agissant sur le verrou (50).

6. Articulation selon la revendication 5, caractérisée en ce que la came (61) d'un couple (61, 62) est portée par un bras (611) radial monté sur l'arbre (63) et en ce que la contre-came (62) de ce couple (61, 62) est portée par le grain denté (43) ou par le pêne (53).

7. Articulation selon l'une quelconque des revendications 5 et 6, caractérisée en ce que l'arbre (63) présente deux méplats (631) symétriques et en ce que la came (61) présente un évidement (612) central en secteur avec deux appuis (613) symétriques destinés à coopérer chacun avec un de ces méplats (631).

8. Articulation selon l'une quelconque des revendications 1 à 7, caractérisée en ce que l'axe de rotation (Δ) est défini par un agencement de guidage qui comprend une surface (120) de guidage cylindrique circulaire du flasque fixe (10) et, coopérant avec cette surface (120), une tranche (220) périphérique cylindrique circulaire du flasque mobile (20) et une tranche (320) périphérique cylindrique circulaire du flasque intermédiaire (30).

9. Articulation selon l'une quelconque des revendications 1 à 8, caractérisée en ce que la gâche (52) a la configuration d'une encoche en créneau avec une entaille (521) et une butée (522) en arc de cercle concave, en ce que le pêne (53) a localement la configuration d'un flanc (530) en arc de cercle convexe.

10. Articulation selon l'une des revendications 1 à 9, caractérisée en ce qu'elle comprend une sécurité (70) pour condamner le verrou (50) en position déclenchée quand le dossier passe de sa position dressée à sa position basculée et inversement.

11. Articulation selon les revendications 9 et 10 caractérisée en ce que cette butée (522) et ce flanc (530) forment ensemble la sécurité (70).

## Claims

1. Articulation which memorises a selected tilted position, intended to be fitted to a seat consisting, in particular, of a seat base and a backrest which are rotationally movable relative to one another along at least one axis so that the backrest can be inclined progressively at will relative to the seat base or so that the backrest can be folded down towards the seat base and vice versa, into a pivoted position or into an upright position, respectively, and which particularly comprises a fixed flange (10) having a cell (11) intended to be fixed to either the seat base or the backrest, a movable flange (20) having a cell (21) intended to be fixed to the other part, i.e. the seat base or backrest, and wherein these cells (11, 21) together define an inner recess, an intermediate flange (30) which is placed in this recess so as to be capable of rotating therein along this axis (Δ), a mechanism (40) for adjusting the tilt which is associated with this intermediate flange (30) and cooperates with this fixed flange (10) and which is movable between an engaged position in which the fixed (10) and intermediate (30) flanges are coupled for rotation and a disengaged position in which these fixed (10) and intermediate (30) flanges are relatively uncoupled for rotation so as to allow the tilt to be adjusted, a latch (50) for preventing folding which is associated with this intermediate flange (30) and cooperates with this movable flange (20) and which is movable between an engaged position in which the movable (20) and intermediate (30) flanges are coupled for rotation and a disengaged position in which the movable (20) and intermediate (30) flanges are relatively uncoupled for rotation so as to allow folding of the seat and vice versa, and a movable control (60) acting on the mechanism (40) and latch (50) so as to move one or other of them (40, 50) at will from its engaged position to its disengaged position in order that the intermediate flange (30) is coupled to both the fixed and movable flanges simultaneously or to only one or other of the fixed (10) and movable (20) flanges, this articulation being characterised in that the intermediate flange (30) is a disc (300) with two opposite sides (301, 302), in that the mechanism (40) comprises at least one serrated member (43) which is adapted to cooperate with teeth (41) carried by an axial side wall (111) of the cell (11) of the fixed flange (10) and which is mounted on one of these two opposing surfaces (301, 302) with the aid of a guide (430) which it carries, in that the latch (50) comprises at least one bolt (53) which is adapted to cooperate with a keeper (52) carried by an axial side wall (211) of the cell (21) of the movable flange (20) and which is mounted on one of these two opposing surfaces (301, 302) by means of a guide (530) which it carries.

2. Articulation according to claim 1, characterised in that the serrated member (43) and the bolt (53) are pivotably mounted on their respective guides (430, 530).

3. Articulation according to claim 1 or 2, characterised in that the guide (430) comprises a bearing surface (431) on the serrated member (43) and a pivot (432) on the intermediate flange (30).

4. Articulation according to claim 1, 2 or 3, characterised in that the guide (530) comprises a bearing surface (531) on the bolt (53) and a pivot (532) on the intermediate flange (30).

5. Articulation according to any one of claims 1 to 4, characterised in that the movable control (60) comprises at least two pairs, each consisting of a cam (61) and second (62) has a support (621), a recess (622) and a nosepiece (623), a shaft (63) adapted to drive the cams (61) and resilient stressing means (64) acting on each of the cams (61), one of said pairs (61, 62) acting on the mechanism (40) and the other of said pairs (61, 62) acting on the latch (50).

6. Articulation according to claim 5, characterised in that the cam (61) of a pair (61, 62) is carried by a radial arm (611) mounted on the shaft (63) and in that the counter-cam (62) of this pair (61, 62) is carried by the serrated member (43) or by the bolt (53).

7. Articulation according to any one of claims 5 and 6, characterised in that the shaft (63) has two symmetrical flattened portions (631) and in that the cam (61) has a central recess (612) in the form of a quadrant with two symmetrical supports (613) each adapted to cooperate with one of the flattened portions (631).

8. Articulation according to any one of claims 1 to 7, characterised in that the rotation axis (Δ) is defined by a guide arrangement which comprises a circular cylindrical guide surface (120) of the fixed flange (10) and, cooperating with this surface (120), a circular cylindrical peripheral section (220) of the movable flange (20) and a circular cylindrical peripheral section (320) of the intermediate flange (30).

9. Articulation according to any one of claims 1 to 8, characterised in that the keeper (52) takes the form of a slot-shaped notch with a groove (521) and an abutment (522) shaped like a concave arc of a circle, and in that the bolt (53) locally takes the form of a flank (530) shaped like a convex arc of a circle.

10. Articulation according to any one of claims 1 to 9, characterised in that it comprises safety means (70) for securing the latch (50) in the disengaged position when the backrest moves from its upright position to its pivoted position and *vice versa*.

11. Articulation according to claims 9 and 10, characterised in that this abutment (522) and this flank (530) together form the safety means (70).

## Patentansprüche

1. Gelenk mit Speicherung der Neigungseinstellung für einen Sitz, der insbesondere aus einer Sitzfläche und einer Rückenlehne besteht, die um mindestens eine Achse in Bezug aufeinander drehbeweglich sind, so daß die Rückenlehne nach Wunsch entweder bezüglich der Sitzfläche progressiv geneigt werden kann oder in eine gekippte Stellung auf den Sitz heruntergeklappt bzw. wieder in eine aufrechte Stellung hochgeklappt werden kann, wobei das Gelenk insbesondere folgendes umfaßt: eine feststehenden Scheibe (10) mit einer Vertiefung (11), die zur Befestigung an einem der aus Sitzfläche und Rückenlehne bestehenden Elemente bestimmt ist, eine bewegliche Scheibe (20) mit einer Vertiefung (21), die zur Befestigung an dem anderen dieser aus Sitzfläche und Rückenlehne bestehenden Elemente bestimmt ist, wobei diese Vertiefungen (11, 21) miteinander eine innere Aussparung abgrenzen, eine Zwischenscheibe (30), die in dieser Aussparung so angeordnet ist, daß sie sich in dieser um diese Achse (Δ) drehen kann, einen der Zwischenscheibe (30) zugeordneten Mechanismus (40) zur Einstellung der Neigung, der mit der feststehenden Scheibe (10) zusammenwirkt und zwischen einer eingerückten Stellung, in der die feststehende Scheibe (10) und die Zwischenscheibe (30) bezüglich Drehung miteinander gekuppelt sind, und einer ausgerückten Stellung beweglich ist, in der die feststehende Scheibe (10) und die Zwischenscheibe (30) bezüglich Drehung voneinander abgekuppelt sind, um eine Einstellung der Neigung zuzulassen, einen der Zwischenscheibe (30) zugeordneten Riegel (50) zur Blockierung der Klappbewegung, der mit der beweglichen Scheibe (20) zusammenwirkt und zwischen einer eingerückten Stellung, in der die bewegliche Scheibe (20) und die Zwischenscheibe (30) bezüglich Drehung miteinander gekuppelt sind, und einer ausgerückten Stellung beweglich ist, in der die bewegliche Scheibe (20) und die Zwischenscheibe (30) bezüglich Drehung voneinander abgekuppelt sind, um ein Herunterklappen oder Hochklappen zu gestatten, und eine bewegliche Betätigungsvorrichtung (60), die auf den Mechanismus (40) und auf den Riegel (50) so einwirkt, daß sie nach Wunsch einen von diesen (40, 50) aus seiner eingerückten Stellung in seine ausgerückte Stellung übergehen läßt, so daß die Zwischenscheibe (30) gleichzeitig mit der feststehenden Scheibe (10) und der beweglichen Scheibe (20) oder nur mit einer von diesen beiden gekuppelt ist, dadurch gekennzeichnet, daß die Zwischenscheibe (30) eine Scheibe (300) mit zwei entgegengesetzten Seiten (301, 302) ist, daß der Mechanismus (40) mindestens ein gezahntes Paßstück (43) aufweist, das dazu bestimmt ist, mit einer an einer axialen Seitenwand (111) der Vertiefung (11) der feststehenden Scheibe (10) vorgesehenen Verzahnung (41) zusammenzuwirken, und auf einer der beiden entgegengesetzten Seiten (301, 302) mit Hilfe einer an dieser vorgesehenen Führung (430) montiert ist, und daß der Riegel (50) mindestens eine Klinke (53) aufweist, die dazu bestimmt ist, mit einer an einer axialen Seitenwand (211) der Vertiefung (21) der beweglichen Scheibe (20) vorgesehenen Raste (52) zusammenzuwirken, und die auf einer der beiden entgegengesetzten Seiten (301, 302) mit Hilfe einer an dieser vorgesehenen Führung (530) montiert ist.

2. Gelenk nach Anspruch 1, dadurch gekennzeichnet, daß das gezahnte Paßstück (43) und die Klinke (53) auf ihrer Führung (430, 530) schwenkbar montiert sind.

3. Gelenk nach Anspruch 1 oder 2, dadurch gekennzeichnet, daß die Führung (430) aus einer Lagerfläche (431) auf dem gezahnten Paßstück (43) und einem Drehzapfen (432) auf der Zwischenscheibe (30) besteht.

4. Gelenk nach Anspruch 1, 2 oder 3, dadurch gekennzeichnet, daß die Führung (530) aus einer Lagerfläche (531) auf der Klinke (53) und einem Drehzapfen (532) auf der Zwischenscheibe (30) besteht.

5. Gelenk nach einem der Ansprüche 1 bis 4, dadurch gekennzeichnet, daß die bewegliche Betätigungsvorrichtung (60) aus folgendem besteht: mindestens zwei aus einem Nocken (61) und einem Gegennocken (62) bestehende Paare, wobei der erste (61) ein Profil (610) mit einer Sohle (6101) und einem Ansatz (6102) aufweist und der zweite (62) eine Auflagefläche (621), eine Ausnehmung (622) und eine Nase (623) aufweist, eine Welle (63), die die Nocken (61) antreiben kann und eine auf jeden der Nocken (61) einwirkende Federbelastung (64), wobei eines dieser Paare (61, 62) auf dem Mechanismus (40) und das andere dieser Paare (61, 62) auf dem Riegel (50) arbeitet.

6. Gelenk nach Anspruch 5, dadurch gekennzeichnet, daß der Nocken (61) eines Paares (61, 62) von einem auf der Welle (63) montierten radialen Arm (611) getragen ist und daß der Gegennocken (62) dieses Paares (61, 62) von dem gezahnten Paßstück (43) oder von der Klinke (53) getragen ist.

7. Gelenk nach einem der Ansprüche 5 oder 6, dadurch gekennzeichnet, daß die Welle (63) zwei symmetrische Abflachungen (631) aufweist und daß der Nocken (61) eine zentrale sektorförmige Aussparung (612) mit zwei symmetrischen Auflageflächen (613) aufweist, die dazu bestimmt sind, jeweils mit einer der Abflachungen (631) zusammenzuwirken.

8. Gelenk nach einem der Ansprüche 1 bis 7, dadurch gekennzeichnet, daß die Drehachse (Δ) durch eine Führungsanordnung definiert ist, die eine kreiszylindrische Führungsfläche (120) der feststehenden Scheibe (10) und, mit dieser Fläche (120) zusammenwirkend, eine kreiszylindrische Umfangskante (220) der beweglichen Scheibe (20) und eine kreiszylindrische Umfangskante (320) der Zwischenscheibe (30) aufweist.

9. Gelenk nach einem der Ansprüche 1 bis 8, dadurch gekennzeichnet, daß die Raste (52) als schartenartige Aussparung mit einem Ausschnitt (521) und einem Anschlag (522) in Form eines konkaven Kreisbogens ausgebildet ist und daß die Klinke (53) örtlich als Flanke (530) in Form eines konvexen Kreisbogens ausgebildet ist.

10. Gelenk nach einem der Ansprüche 1 bis 9, dadurch gekennzeichnet, daß es eine Sicherung (70) aufweist, um den Riegel (50) in ausgerückter Stellung zu sperren, wenn die Rückenlehne von ihrer aufgerichteten Stellung in ihre gekippte Stellung und umgekehrt übergeht.

11. Gelenk nach den Ansprüche 9 und 10, dadurch gekennzeichnet, daß der Anschlag (522) und die Flanke (530) zusammen die Sicherung (70) bilden.
